# EUROPEAN PATENT APPLICATION

(11) **EP 2 042 752 A1**
(43) Date of publication of application: **01.04.2009**
(21) Application number: 07117342.1
(22) Date of filing: 27.09.2007
(51) Int. Cl.: F16C 1/26

(54) **Anchoring device for the sheath terminal of a Bowden cable**

(71) Applicant: Fico Triad S.A., 08100 MOLLET DEL VALLES (ES)
(72) Inventor: Doña, Juan Manuel, 08191, RUBI (ES); Jornet, Jordi, 08224, TERRASSA (ES)
(74) Representative: Barlocci, Anna

(57) **Abstract**

An anchoring device comprises a support member (2) having a slot (3) open out at one edge thereof adapted for receiving a first cylindrical portion (5) of a sheath terminal (4), gripping means (8) for receiving and retaining a second cylindrical portion (11) of the sheath terminal (4), biasing means (12) for urging the gripping means (8) in a radial direction (A) substantially opposite the direction of insertion (B) of the terminal (4), and guiding means (13) for guiding the gripping means (8) as it is displaced by the biasing means (12). The gripping means (8) has resilient arms (9,10) for receiving the second cylindrical portion (11) therebetween.

## Description

### Field of the invention

The present invention relates to an anchoring device for a sheath terminal for a driving cable in which the device has a support member with a slot open out at one edge thereof. This slot is adapted for receiving a first cylindrical portion of the sheath terminal.

With the anchoring device of the invention, the operator is advised during the assembling operation that the sheath terminal is not being correctly fitted in the support member so the terminal is ejected out of the support member when in such wrong assembling operation.

### BACKGROUND ART

A known solution for fixing a cable sheath so that the driving cable fitted therein is allowed to run comprises the provision of a sheath terminal fixed to a length of the driving cable and a fixed support member suitable for receiving the terminal. The support member is typically a plate attached to a fixed part, e.g. a vehicle frame and having a slot open at one edge thereof such that it is substantially U-shaped near said edge. The sheath terminal typically comprises a ringed groove for receiving the fixed support member, in the slot thereof.

The term driving cable, as used herein, relates to a cable employed, for example, for operating a brake and/or a throttle system, gear boxes, etc; whereas the term sheath terminal, as used herein, relates to an element intended for fixing the cable sheath to a support member integral with or attached to a motor vehicle

In assembling operations, when the operator inserts the sheath terminal into the support member, it may occur that the terminal is not completely fitted into the slot of the support member and therefore assembly may sometimes not be correctly performed.

WO2004036068 discloses an anchoring device for anchoring an elongate member to a fixed member, having a slot leading to an edge thereof. The anchoring device comprises a sleeve which can be fixed coaxially around the elongate member and which is provided with a circumferential groove having an axial length to accommodate the thickness of the fixed member at the slot, with the outer diameter of the groove being less than the inner diameter of the slot. The anchoring device further comprises a collar member which is carried by, and axially moveable along, said sleeve, and which has a leading edge extending into said groove when the anchoring device is located within said slot to increase the diameter of the groove and prevent the anchoring device from being withdrawn from the slot. The collar member is arranged such that the leading edge thereof can be withdrawn from the groove by moving the collar member along the sleeve in an axial direction away from the slot, so as to enable the anchoring device to be withdrawn from the slot.

GB2346186 discloses an anchoring device for anchoring an elongate member to a flat plate provided with a slot leading to one edge thereof. The device includes a sleeve for fitting over the member and having a groove slidable along the slot and a spring-loaded ring that is movable along said sleeve to allow accommodation of the slotted plate within the groove. The ring is biased to interlock with a projection on the plate.

Such prior art devices do not however provide for a quick and effective anchoring of a sheath terminal in a fixed support member so there remains a need for such a device adapted for a quick fixing of the cylindrical body of the terminal while ensuring that said terminal can be only fitted in a full, right position into the fixed support.

The invention provides a device which can efficiently retain the sheath of a driving cable in position when it is operated and further ensures that the terminal is correctly inserted into the fixed support member.

### SUMMARY OF THE INVENTION

The present invention provides an anchoring device for a sheath terminal in a driving cable, for example for operating the brake, the throttle, a gearbox, etc in a motor vehicle. The terminal is fixed at one length of the sheath of a driving cable and it is adapted for retaining the sheath of the driving cable in a support member fixed, e.g. to the vehicle frame, such that the cable is allowed to run through the inside of the sheath when operated. The sheath terminal comprises a cylindrical body having a first cylindrical portion and a second cylindrical portion

The anchoring device of the invention comprises a support member having a slot open out at one edge thereof adapted for receiving the first cylindrical portion of a sheath terminal.

The fact that the sheath terminal comprises a cylindrical body having a first cylindrical portion and a second cylindrical portion involves that two clamping portions are defined, namely, an axial clamping portion for preventing the terminal from being moved lengthwise, and a radial clamping portion for preventing the terminal from being released out of the support member.

The device further comprises a gripping means associated with the support member for receiving and retaining the second cylindrical portion of the sheath terminal.

Biasing means are also provided associated in turn with the gripping means for urging the gripping means in a radial direction. Said urging effect is caused in response of the insertion of the terminal such that the urging radial direction of the gripping means is opposite or substantially opposite (e.g. crosswise) the direction of insertion of the terminal.

Gripping means is therefore allowed to slide relative to the support member against the action of the biasing means and interacts with the radial clamping portion of the terminal. As a consequence, if the terminal is mislocated, that is, if the sheath terminal is placed wrongly into the slot of the support member, the terminal is ejected out of the support member, alerting the operator that assembling has not been correctly performed. This ensures that only a correct, full and reliable engagement of the sheath terminal into the support member can be performed and therefore a safety feature is provided.

Due to the cylindrical geometry of the two terminal body portions, the sheath terminal can be fitted into the support member in any angular position thus facilitating assembling operations and making possible such operations to be performed quickly.

In some embodiments of the invention, the gripping means may include resilient arms defining a space between them for receiving the second cylindrical portion of the sheath terminal. Therefore, it is preferred that the force exerted by the biasing means is lower than the force exerted by the resilient arms.

Still in other embodiments, the second cylindrical second portion of the sheath terminal may have a diameter substantially larger than the space between the resilient arms.

The biasing means may comprise at least one spring, e.g. one or more compression springs, fixed relative to the support member provided that they are adapted for biasing the gripping means to the sheath terminal.

It is preferred that a guiding means is provided. Such guiding means is linked to the support member for guiding the gripping means as it is displaced by the biasing means as the sheath terminal is fitted by an operator into the support member.

In some embodiments, the guiding means may comprise two guides between which the arms of the gripping means can be displaced. Slots are formed in the support member into which protrusions formed in the gripping means may freely run.

Still in other embodiments of the guiding means, a housing fixed to the support member is provided. Slots are in this case formed in the housing into which the protrusions in the gripping means may freely run. The housing has engaging protrusions projecting outward therefrom for fixing to the support.

### BRIEF DESCRIPTION OF THE DRAWINGS

A particular embodiment of an anchoring device according to the present invention will be described in the following, only by way of non-limiting example, with reference to the appended drawings, in which:
Fig.1 is a side elevational sectional view of an anchoring device according to the invention in which the sheath terminal is not still inserted into the support member;
Fig. 2 is a front elevational sectional view of the anchoring device in Fig. 1 in which the sheath terminal is about to be inserted into the support member;
Fig. 3 is a front elevational sectional view of the anchoring device in Fig. 1 in which the sheath terminal is being further inserted into the support member;
Fig. 4 is a front elevational sectional view of the anchoring device in Fig. 1 in which the sheath terminal is fully inserted into the support member;
Fig. 5 is a front elevational view of a support member of the anchoring device of the present invention;
Fig. 6 is a front elevational view of a first embodiment of the guiding means for the gripping means in the anchoring device of the present invention;
Fig. 7 is a front elevational view of a second embodiment of the guiding means for the gripping means; and
Fig. 8 is a side elevational sectional view of the second embodiment of the guiding means in Fig. 7.

### DETAILED DESCRIPTION OF PARTICULAR EMBODIMENTS

One embodiment of an anchoring device of the invention, designated as a whole with reference numeral 1, is disclosed according to the figures.

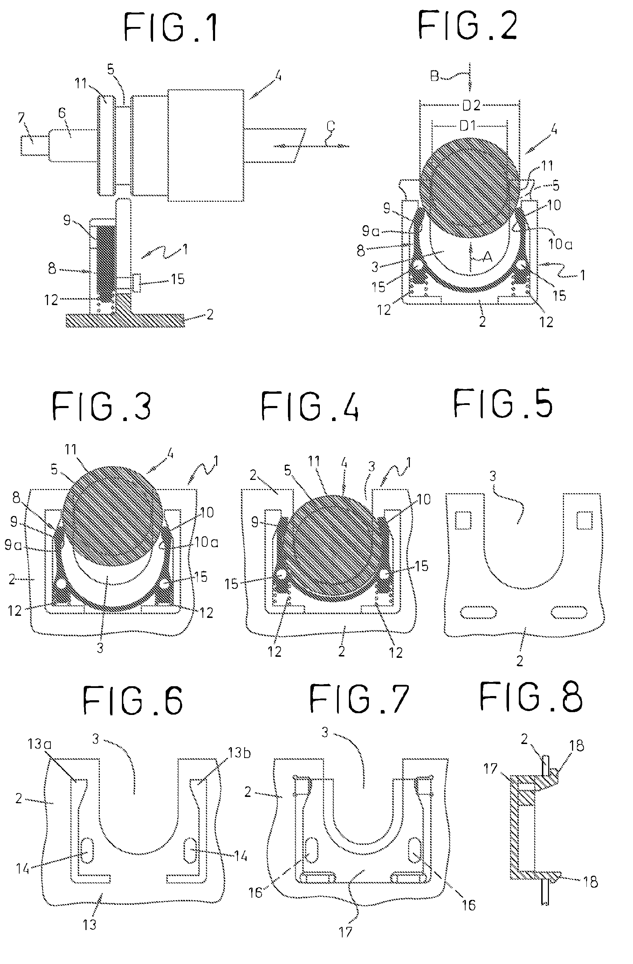

As shown in figures, the device comprises a support member 2 which is partially shown in the figures. The support member 2 comprises a plate (see, e.g. figs. 6 and 7, as well as fig. 5 in greater detail) that can be made out of plastics or metal, such as for example, aluminium. This plate has a slot 3 open out at its upper edge adapted for receiving a sheath terminal 4 such as the one shown in figs. 1-4 of the drawings. More specifically, the slot 3 of the support member 2 is adapted for receiving a first cylindrical portion 5, having an outer diameter D1, of said sheath terminal 4. Reception of the sheath terminal 4 by the slot 3 in the support member 2 is carried out in a radial direction B, as shown in fig. 2 of the drawings.

The sheath terminal 4 comprises a cylindrical body attached to a length of the sheath 6 of a driving cable 7, as shown in fig. 1 of the drawings. The cylindrical geometry of the terminal 4 allows it to be fitted into the slot 3 of the support member 2 at any angular position thus facilitating assembling operations and making them to be performed quickly.

The driving cable 7 associated with the above mentioned terminal 4 is of the type used, for example, for operating the brake, the throttle, a gearbox, etc. in a motor vehicle. The sheath terminal 4 shown in the figures is adapted for retaining the sheath 6 of the driving cable 7 in the support member 2 when the sheath terminal 4 is inserted in the support member 2. The support member 2 is in turn fixed, for example, to a vehicle frame. In use, the driving cable 7 is allowed to run through the inside of the sheath 6 when operated.

The device 1 further comprises a gripping means 8 including two resilient arms 9, 10 each having an inner rising ramp 9a, 10a, respectively. Between the resilient arms 9, 10, a space is defined in between for receiving a second cylindrical portion 11 of the sheath terminal 4 having an outer diameter D2. The outer diameter D2 of the second cylindrical portion 11 is, in the embodiment shown, substantially larger than the diameter D1 of the first cylindrical portion 5 and slightly larger than the distance between the respective uppermost edges of the resilient arms 9, 10.

The sheath terminal 4 is therefore provided with two cylindrical portions (the first cylindrical portion 5 and the second cylindrical portion with respective outer diameters D1 and D2). The gripping means 8 is associated with the support member 2 for receiving and retaining the terminal 4 through said second cylindrical portion 11 thereof. As a consequence, two clamping portions are defined in the terminal body: an axial clamping portion for preventing the terminal 4 from being moved lengthwise (as indicated by C in fig. 1), and a radial clamping portion for preventing the terminal 4 from getting out of the support member 2.

Biasing means 12 are also provided (see figs.1-4) consisting, in the embodiment shown, of two spaced apart compression springs that are fixed relative to the support member 2. Although in the embodiment shown in the figures two springs are provided, other embodiments of the anchoring device 1 herein described may employ biasing means 12 comprising, for example, a single spring or even the gripping means itself having a lower biasing portion.

The biasing means 12 are associated with the gripping means 8 for urging the lower portion of the gripping means 8 in a radial direction A, substantially opposite the direction of insertion B of the sheath terminal 4 as shown in fig. 2.

The force exerted by the biasing means 12 is lower than the force exerted by the resilient arms 9, 10 such that the gripping means 8 can be forced down in the direction B before the sheath terminal 4 is suitably inserted into the slot 3, between said arms 9, 10.

The gripping means 8 is allowed to slide relative to the support member 2 against the action of springs of the biasing means 21.

In conventional devices, the insertion of the terminal into the slot of the support member involves a travel of the terminal ranging usually from 15 to 25 mm since the time the terminal is brought into contact with the support until the terminal is fully fitted therein. Throughout the terminal travel as it is inserted by the operator into the slot of the support, a displacement dependent force is exerted against the terminal which makes the terminal to be inserted to an intermediate position when the force exerted by the operator is ceased. This involves that the assembly of the terminal into the support is neither complete nor correct and therefore that the terminal could become unintentionally out of the support.

In the embodiment of the invention shown in the figures, if the sheath terminal 4 is mislocated, that is, if it is placed wrongly into the slot 3 of the support member 2, the terminal 4 is automatically ejected out of the support member 2, alerting the operator that assembling has not been correctly performed. This is made possible by the provision of the above described gripping means 8 which, on insertion of the sheath terminal 4, applies a force against the second portion 11 of the sheath terminal 4.

Guiding means 13 is further provided for guiding the gripping means 8 as it is displaced by the biasing means 12 when fitting the sheath terminal 4 into the support member 2 by an operator.

In one embodiment of the guiding means 13 shown in figs. 1-6, two guides 13a, 13b are provided. The resilient arms 9, 10 can be displaced between said guides 13a, 13b when the terminal 4 is fitted into or removed from the support member 2. Slots 14 are formed in the support member 2 into which protrusions 15 projecting outward the gripping means 8 may freely run in use.

In another embodiment of the guiding means 13, shown in figs. 7 and 8, a housing 17 fixed to the support member 2 is provided. Slots 16 are formed in said housing 17 into which the protrusions 15 projecting outward the gripping means 8 may freely run in use. The housing 17 in this embodiment has engaging protrusions 18 projecting outward therefrom for fixing to the support 2, as shown in fig. 8.

Both the housing 17 of said second embodiment and the two guides 13a, 13b of said first embodiment of the guiding means 13 are shaped such that the gripping means 8 is at least partially surrounded in such a way said gripping means 8 can be displaced in a guided manner as the sheath terminal 4 is inserted to or removed from the support member 2.

Starting from a condition of the anchoring device 1 shown in fig. 1 in which the terminal 4 is not yet fitted into the support member 2, the operator places de terminal 4 on the support member 2 (that is fixed e.g. to the vehicle frame) and starts fitting the terminal 4 into the slot 3 of the support 2 by exerting a downward force in a radial direction B, shown in fig. 2.

The second cylindrical portion 11 of the terminal 4 is then brought into contact with the gripping means 13 of the anchoring device 1, as shown in fig. 2. As the terminal 4 is further fitted into the slot 3 of the support 2, the gripping means 8 is pushed down against the force exerted by the biasing means 12, which, on the other hand, is lower than the force exerted by the arms 9, 10.

In fig 3, the terminal 4 is still in a first travel portion of the gripping means 13 in which the terminal 4 could be ejected out if the downward force exerted by the operator is ceased. In this position, the resilient arms 9, 10 of the gripping means 8 are caused to open such that the space therebetween becomes broader.

The separation between the resilient arms 9, 10 is increased as the second portion 11 of the terminal 4 is being fitted thanks to the respective ramps 9a, 10b of the arms 9, 10. If, in this point, the terminal insertion force exerted by the operator is ceased, the terminal 4 would be ejected by the gripping means 8 thus indicating that a wrong assembling is being performed.

Subsequent travel of the second portion 11 of the terminal 4 into the slot 3 of the support 2 results in a further aperture of the arms 9, 10 to an extent that the outer diameter D2 of the second cylindrical portion 11 of the sheath terminal 4 substantially corresponds to the separation of the arms 9, 10. This aperture of the arms 9, 10 makes the fitting strength suddenly disappear (the second cylindrical portion 11 of the terminal 4 has already overcome a pick force point). A force imbalance then takes place thus enabling a firm and quick displacement to be performed towards a final, fastening position, shown in fig. 4 of the drawings.

As the sheath terminal 4 reaches said fastening position depicted in fig. 4, the gripping means 8 is simultaneously brought up by the biasing means 12 such that the second portion 11 of the terminal 4 is completely fitted between the arms 9, 10 in such a way that said portion 11 can not be released therefrom. In this condition, besides the second portion 11 of the terminal 4 being completely fitted between the arms 9, 10, the first portion 5 of the terminal 4 is completely fitted into the slot 3 of the support member 2 too.

The invention is not limited to the embodiments herein described. For example, in other embodiments of the device 1 of the invention, the diameter D1 of the first cylindrical portion 5 of the sheath terminal 4 may be substantially larger than the diameter D2 of the second cylindrical portion 11. In any case, the cylindrical portions 5, 11 may be adapted to be respectively received into the slot 3 of the support member 2 and between the arms 9, 10 of the gripping means 8.

## Claims

1. Anchoring device (1) for a sheath terminal (4), the device (1) comprising a support member (2) having a slot (3) open out at one edge thereof adapted for receiving a first cylindrical portion (5) of a sheath terminal (4), **characterized in that** the device (1) further comprises a gripping means (8) for receiving and retaining a second cylindrical portion (11) of the sheath terminal (4), and biasing means (12) for urging the gripping means (8) in a radial direction (A) substantially opposite the direction of insertion (B) of the terminal (4).

2. Anchoring device (1) as claimed in claim 1, wherein the gripping means (8) includes resilient arms (9, 10) defining a space between them for receiving said second cylindrical portion (11) of the sheath terminal (4).

3. Anchoring device (1) as claimed in claim 1 or claim 2, wherein the force exerted by the biasing means (12) is lower than the force exerted by the resilient arms (9, 10).

4. Anchoring device (1) as claimed in claim 2, wherein the second cylindrical portion (11) of the sheath terminal (4) has a diameter (D2) substantially larger than the space between said arms (9, 10).

5. Anchoring device (1) as claimed in claim 1, wherein the biasing means (12) comprise at least one spring fixed relative to the support member (2) and adapted for biasing the gripping means (8) to the terminal (4).

6. Anchoring device (1) as claimed in claim 1, wherein it comprises guiding means (13) linked to the support member (2) for guiding the gripping means (8) as it is displaced by the biasing means (12).

7. Anchoring device (1) as claimed in claim 6, wherein said guiding means (13) comprises guides (13a, 13b) between which the arms (9, 10) can be displaced and slots (14) formed in the support member (2) into which protrusions (15) formed in the gripping means (8) may run.

8. Anchoring device (1) as claimed in claim 6, wherein said guiding means (13) comprises a housing (17) fixed to the support member (2) and slots (16) formed in the housing (17) into which the protrusions (15) in the gripping means (8) may run.

9. Anchoring device (1) as claimed in claim 8, wherein said housing (17) has engaging protrusions (18) projecting outward therefrom for fixing to the support member (2).
